# EUROPEAN PATENT APPLICATION

(11) **EP 3 988 722 A1**
(43) Date of publication of application: **27.04.2022**
(21) Application number: 20849128.2
(22) Date of filing: 13.04.2020
(51) Int. Cl.: E02F 9/20, E02F 9/26, G05D 1/00, H04Q 9/00

(54) **WORK MACHINE**

(30) Priority: 02.08.2019 JP 2019143147
(71) Applicant: KOBELCO CONSTRUCTION MACHINERY CO., LTD., Hiroshima-shi Hiroshima 731-5161 (JP)
(72) Inventor: OKADA Tomofumi, Hiroshima-shi, Hiroshima 731-5161 (JP); TANAKA Kiyokazu, Tokyo 141-8626 (JP)
(74) Representative: Schön, Christoph
(86) International application number: PCT/JP2020/016299
(87) International publication number: WO 2021/024553

(57) **Abstract**

There is provided a work machine enabling an operator who operates the work machine to remotely control another work machine with a feeling that the work machine is operated. An work machine 100 includes an operation mechanism 52 provided in a ride section 50 and to be operated by the operator, an actuator 63 (a driving mechanism) configured to drive the work machine 100, communication equipment 53, and a master control device 61. The master control device 61 controls an operation of the actuator 63 depending on an operation mode of the operation mechanism 52 by the operator and causes the communication equipment 53 to transmit an operation command signal to the other work machine 200 after generating the operation command signal.

## Description

### Technical Field

The present invention relates to a work machine in which an operator can ride.

### Background Art

Work using a work machine such as a hydraulic shovel has generally been performed when an operator rides in a driver's cab of a work machine to operate an operation lever. However, work in a work site such as a disaster recovery site imposes a large burden on the operator. To reduce the burden on the operator, work by automatic control for controlling driving of the work machine has been performed to automatically perform a specific operation.

To cope with such a case where the work machine has stopped when work by automatic control is being performed, an operation system that performs work by switching from the automatic control to remote control has been proposed (see, e.g., Patent Literature 1).

### Citation List

### Patent Literature

Patent Literature 1: Domestic re-publication of PCT international application No. 2016-121010

### Summary of Invention

### Technical Problem

In the operation system in the above-described conventional technique, the remote control of the work machine has been performed using a controller dedicated to remote control. A peripheral environment of the controller dedicated to remote control differs from a peripheral environment of an actual work site. Therefore, there has been a problem that an operator cannot perform an operation with a realistic sensation and a work efficiency has greatly decreased from when the work machine is actually operated to perform work.

The present invention has been made in view of the above-described problem, and has as its one object to provide a work machine enabling an operator who operates an own work machine to remotely control, while performing work using the own work machine in the same site as that of another remotely controllable work machine, the other work machine while viewing the other work machine, as needed.

### Solution to Problem

A work machine according to a first aspect of the present invention is a work machine including a ride section in which an operator can ride, the work machine including an operation mechanism provided in the ride section and to be operated by the operator, a driving mechanism configured to drive the work machine, communication equipment, and a master control device that controls an operation of the driving mechanism depending on an operation mode of the operation mechanism by the operator and causes the communication equipment to transmit an operation command signal to another work machine other than the work machine after generating the operation command signal.

A work machine according to a second aspect of the present invention is a work machine that is communicatively connected with another work machine and performs work according to a control program based on a work plan, the work machine including a driving mechanism configured to drive the work machine, communication equipment, and a slave control device that controls an operation of the driving mechanism to cause the work machine to perform work based on the predetermined work plan according to the control program, in which the slave control device compares progress of work by the work machine with the predetermined work plan, causes the communication equipment to transmit a warning to the other work machine when a result of the comparison indicates that the progress of the work by the work machine deviates from the predetermined work plan, and controls the operation of the driving mechanism based on an operation command signal from the other work machine received from the other work machine by the communication equipment after transmitting the warning.

### Brief Description of Drawings

FIG. 1 is an image view schematically illustrating a work system according to the present embodiment.
FIG. 2 is a side view illustrating a configuration of a work machine according to the present embodiment.
FIG. 3 is a plan view illustrating a configuration of an operation chamber of a master machine according to the present embodiment.
FIG. 4 is a block diagram illustrating a configuration of the work system according to the present embodiment.
FIG. 5 is a flowchart illustrating a routine of processing to be performed by the master machine.
FIG. 6 is a flowchart illustrating a routine of processing to be performed by a slave machine.
FIG. 7 is a flowchart illustrating a routine of processing to be performed by the master machine.
FIG. 8 is a flowchart illustrating a routine of processing to be performed by the slave machine.
FIG. 9 is a flowchart illustrating a routine of processing to be performed by the slave machine.

### Description of Embodiments

An embodiment of the present invention will be described below with reference to the drawings. In description and accompanying drawings in the following embodiment, units substantially identical or equivalent are respectively assigned the same reference numerals.

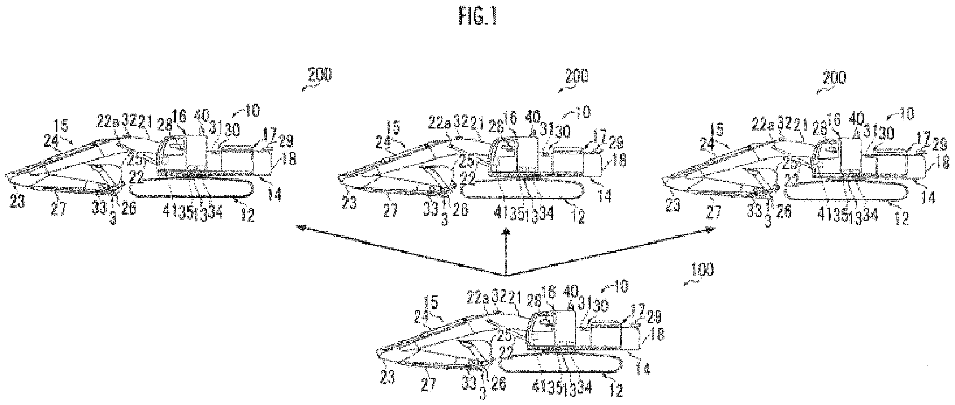

FIG. 1 is an image view schematically illustrating a work system according to the present embodiment. The work system according to the present embodiment includes a master work machine 100 (hereinafter referred to as "master machine") and a slave work machine 200 (hereinafter referred to as "slave machine") configured to be communicable with the master machine 100. In the present embodiment, a case where both the master machine 100 and the slave machine 200 are respectively hydraulic shovels will be described as an example. In the present embodiment, a case where the system includes one master machine 100 and three slave machines 200 will be described as an example.

The master machine 100 has a function as a remote control device that remotely controls any one of the slave machines 200 in response to switching of an operation mode in addition to performing work using a housing of the master machine 100 in response to a ride and an operation of an operator.

Each of the slave machines 200 is configured to be able to perform work upon receipt of remote control from the master machine 100 in response to the switching of the operation mode in addition to performing work according to an automatic control program.

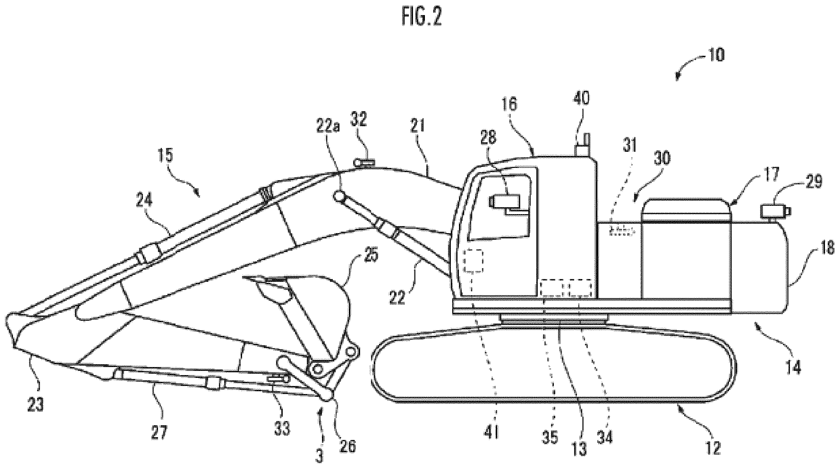

FIG. 2 is a side view illustrating a configuration of a construction machine 10 used as the slave machine 200.

The construction machine 10 is a hydraulic shovel, and includes a lower traveling body 12, an upper turning body 14 turnably provided on the lower traveling body 12 with a turning shaft 13 interposed therebetween, and a work device 15 provided in the upper turning body 14. A cab 16 is mounted in a front side portion of the upper turning body 14, and an engine arranged in a machine chamber 17 and a counter weight 18 are mounted in a rear portion of the upper turning body 14.

A boom 21 and a boom cylinder 22 that rotates the boom 21 are rotatably pivotally supported on the upper turning body 14. A distal end portion of the boom cylinder 22 is rotatably connected to the boom 21 with a pin 22a interposed therebetween. An arm 23 is pivotally supported on a distal end of the boom 21 to be rotated by an arm cylinder 24. A bucket 25 as a distal end attachment is pivotally supported on the arm 23 to be rotated by a bucket cylinder 27 via a link section 26.

The cab 16 is provided with a first camera 28 (a first image pickup device) that acquires image information around the construction machine 10, and a second camera 29 (a second image pickup device) that acquires image information behind the construction machine 10 is provided in a rear portion of the upper turning body 14.

The construction machine 10 includes a sensor section 30 that acquires a plurality of types of non-image information, which is different from the image information, around the construction machine 10 and of a work section 3, information communication equipment 40 that transmits the image information and the non-image information to the master machine 100, and a control device 41 that controls respective operations of the sensor section 30, the first camera 28, the second camera 29, and the information communication equipment 40.

Examples of the non-image information include a sound, a vibration, an inclination, an inertia, and an odor. Specifically, the non-image information includes at least one of sounds such as a sound produced from an engine of the machine chamber 17, a sound from the whole of the work section 3 such as the boom 21 and the arm 23, and a sound to be produced from the bucket 25, a vibration to be transmitted to the cab 16, an inclination of the cab 16 to a horizontal plane, an inertia to be applied to the upper turning body 14 or the like at the time of turning of the upper turning body 14, and an odor to be produced from the construction machine 10 and the periphery of the construction machine 10.

The sensor section 30 includes an microphone 31 for engine sounds that is provided in the machine chamber 17 and mainly collects an engine sound, a microphone 32 for work section peripheral sounds that is provided in the boom 21 and mainly collects a sound to be emitted from structures of the work section 3 such as the boom 21 and the arm 23, and a microphone 33 for distal end attachment peripheral sounds that is provided in the arm 23 and mainly collects a work sound to be produced from the bucket 25.

The sensor section 30 includes a vibration sensor 34 that is provided in the cab 16 and detects a vibration to be transmitted to the cab 16 and an inclination sensor 35 that is provided in the cab 16 and detects an inclination of the cab 16 to the horizontal plane. Further, the sensor section 30 may include an inertial sensor that is provided in the upper turning body 14 and detects an inertia to be applied to the upper turning body 14 at the time of turning, an odor sensor that is provided in the cab 16 and detects an odor (the presence or absence and the type of an odor component) around the construction machine 10, and the like, that are not illustrated.

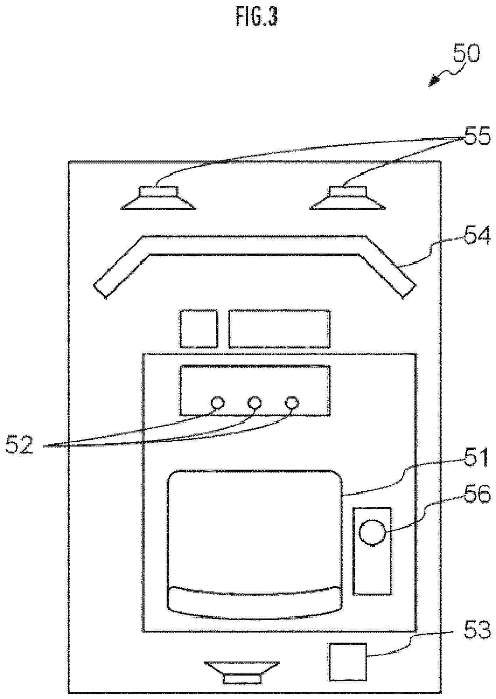

The configuration of the master machine 100 differs from the configuration of the slave machine 200 in that an operation chamber 50 (see FIG. 3) capable of performing an operation with the operator riding therein is provided instead of or in addition to the first camera 28 inside the cab 16 in the construction machine 10 illustrated in FIG. 2.

FIG. 3 is a plan view illustrating a configuration of the operation chamber 50 (a ride section) provided in the cab 16 in the master machine 100. The operation chamber 50 includes a seat 51 on which the operator is seated, an operation mechanism 52 that operates the master machine 100, and communication equipment 53 that transmits and receives various types of signals among slave machines 20A, 20B, and 20C. The operation mechanism 52 includes a lever and a button, for example (i.e., a common operation interface) corresponding to both an operation of the master machine 100 and an operation of the slave machines 20A, 20B, and 20C. An input signal corresponding to an operation received via the operation mechanism 52 is an operation command signal of the master machine 100 in actual work using the master machine 100. The input signal is transmitted to the slave machines 20A, 20B, and 20C as an operation command signal of the slave machine 200 when the slave machines 20A, 20B, and 20C are remotely controlled.

The operation chamber 50 includes a monitor 54 that is arranged in front of the operator and displays an image and a video, a speaker 55 that outputs a voice, and an operation switching section 56 that receives an input for switching an operation target.

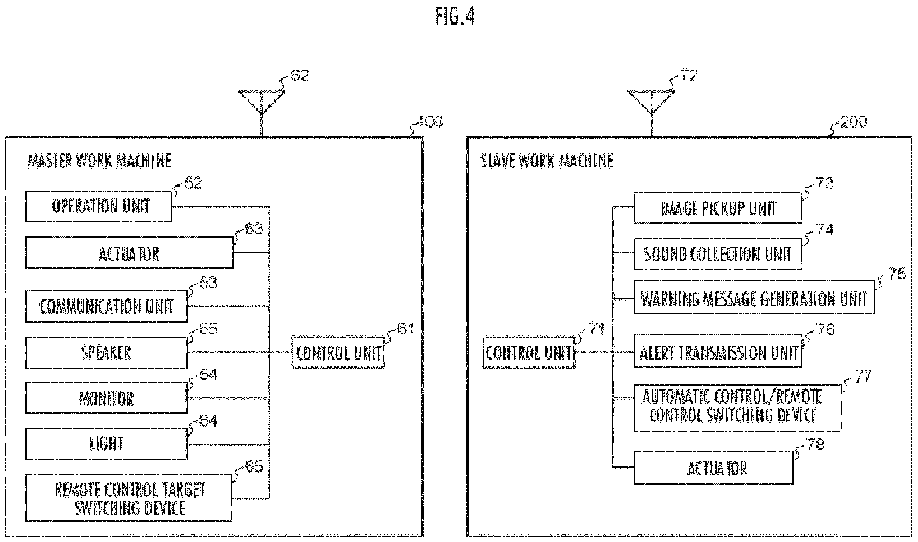

FIG. 4 is a block diagram illustrating a configuration of the work system according to the present embodiment. Here, a configuration of the master machine 100 and a configuration of the slave machine 200 are illustrated.

The master machine 100 includes a control device 61 (a master control device), an antenna 62, an actuator 63 (a master driving mechanism), a light 64, and a remote control target switching device 65 in addition to the operation mechanism 52, the communication equipment 53, the monitor 54, and the speaker 55.

The control device 61 is a control device that controls an operation of each of units in the master machine 100. For example, the control device 61 causes the master machine 100 to perform actual work by supplying to the actuator 63 a driving signal corresponding to an operation by which the operation mechanism 52 has received an input. The driving signal is an electric signal for driving each of the units in the master machine 100, for example. The electric signal may be replaced with a pilot pressure (hydraulic pressure).

The control device 61 controls the communication equipment 53 to transmit toward the slave machine 200 an operation command signal corresponding to the operation by which the operation mechanism 52 has received an input when the slave machine 200 is set to a "remote control mode".

The antenna 62 is a communication antenna used for communication with the slave machine 200.

The actuator 63 is a driving mechanism, including a turning motor, a cylinder, and the like, which drives a turning shaft of the master machine 100. The actuator 63 drives each of the units in response to a driving signal supplied from the control device 61.

The light 64 is an illumination device such as a headlight that illuminates the outside of the master machine 100.

The remote control target switching device 65 is a device that performs switching processing as processing for switching as to which of the plurality of slave machines 200 is to be a remote control target by the master machine 100.

The slave machine 200 includes a control device 71 (a slave control device), an antenna 72, an image pickup unit 73, a sound collection unit 74, a warning message generation unit 75, alert communication equipment 76, an automatic control/remote control switching device 77, and an actuator 78 (a slave driving mechanism).

The control device 71 is a control device that controls an operation of each of the units in the slave machine 200. For example, the control device 71 operates each of the units in the slave machine 200 by supplying a driving signal to the actuator 78, and causes the slave machine 200 to perform work.

The slave machine 200 performs work in either one of two modes, i.e., the "automatic control mode" and the "remote control mode". The slave machine 200 is set to the "automatic control mode" at the time of turn-on of power.

In the "automatic control mode", the control device 71 reads out and executes a predetermined automatic control program from a storage section (not illustrated) provided in the slave machine 200, for example, and supplies a driving signal conforming to the automatic control program to the actuator 78.

In the "remote control mode", the control device 71 supplies to the actuator 78 a driving signal corresponding to the operation command signal received from the master machine 100, and drives each of the units in the slave machine 200 to perform work corresponding to remote control.

The antenna 72 is a communication antenna used for communication with the master machine 100.

The image pickup unit 73 includes a first camera 28 and a second camera 29. The image pickup unit 73 is image pickup means configured to shoot a landscape (e.g., a work situation) around the slave machine 200 to acquire an image.

The sound collection unit 74 includes the microphone 31 for engine sounds, the microphone 32 for work section peripheral sounds, and a microphone 33 for distal end attachment peripheral sounds. The sound collection unit 74 is voice acquisition means configured to collect a voice generated around the slave machine 200.

The warning message generation unit 75 generates a warning (hereinafter merely referred to as alert) as a warning message indicating that an abnormality has occurred in work while the slave machine 200 is performing the work in the "automatic control mode". Occurrence of a situation where a degree of progress of work is delayed or a situation where progress of work is difficult, for example, a case where a large rock appears while excavation work by automatic control is being performed and the necessity of coping with the rock has occurred, i.e., a state where work based on a work plan and a work process of the automatic control program is difficult is referred to as an "abnormal state in work".

For example, the slave machine 200 includes a sensor (not illustrated) that determines an angle of a machine body in a horizontal direction, and determines, if an angle at which the machine body is raised and an angle at which the machine body sinks while work by automatic control is being performed exceed a predetermined threshold value, that an abnormality has occurred in the work.

If the front of the slave machine 200 is raised, for example, it can be expected that a hard rock, a rock bed, or the like has appeared during excavation work. If the front of the slave machine 200 sinks, it can be expected that a collapse or a slope failure has occurred.

If the slave machine 200 includes a timer (not illustrated) that measures time for each work process, for example, and work a work time period of which significantly exceeds a predetermined work time period has occurred, it may be determined that an abnormality has occurred in the work. The warning message generation unit 75 generates an alert if it is determined that an abnormality has occurred in work of the slave machine 200 using these methods. The alert communication equipment 76 is communication equipment that transmits the alert generated by the warning message generation unit 75 to the master machine 100 via the antenna 72.

The automatic control/remote control switching device 77 is a switching device that switches the operation of the slave machine 200 to either one of automatic control and remote control in response to control of the control device 71.

The actuator 78 is a driving mechanism, including a turning motor, a cylinder, and the like, which drives the turning axis of the slave machine 200. The actuator 78 drives each of the units in response to the driving signal supplied from the control device 71.

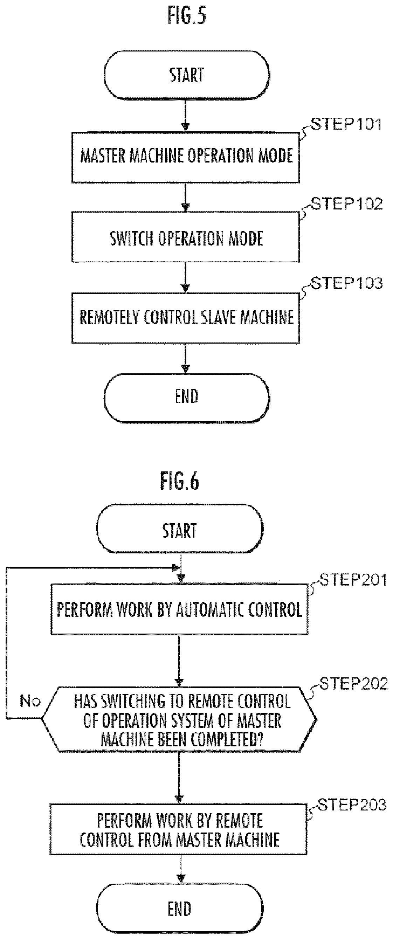

Then, an operation of the master machine 100 in the work system according to the present embodiment will be described with reference to a flowchart of FIG. 5.

The master machine 100 is set to a "master machine operation mode" as a mode for performing work of the master machine 100 itself in a state where an abnormality of work has not occurred (hereinafter referred to as a normal working state) in any one of the plurality of slave machines 200 (STEP 101). In the master machine operation mode, the operator operates the operation lever constituting the operation mechanism 52, for example, to perform excavation work or the like around the master machine 100. While the master machine 100 is set to the master machine operation mode, the slave machine 200 is set to an automatic control mode, and performs work by automatic control.

The control device 61 in the master machine 100 switches an operation mode with receiving of an alert from the slave machine 200 as a trigger (STEP 102). Specifically, the control device 61 in the master machine 100 performs switching from the "master machine operation mode" to a "remote control mode" as an operation mode for remotely controlling the slave machine 200 as a transmission source of the alert among the plurality of slave machines 200.

The master machine 100 remotely controls the slave machine 200 in response to the operation performed by the operator (STEP 103).

Then, an operation of the slave machine 200 in the work system according to the present embodiment will be described with reference to a flowchart of FIG. 6.

The slave machine 200 is set to an "automatic control mode" as a mode for performing work by automatic control in a normal working state. The slave machine 200 performs work by automatic control in response to turn-on of power (STEP 201).

The control device 71 in the slave machine 200 determines whether or not switching to remote control of an operation system of the master machine 100 has been completed based on communication with the master machine 100 (STEP 202).

If it is determined that the switching to the remote control of the work system of the master machine 100 has not been completed (NO in STEP 202), the processing returns to STEP 201, and the slave machine 200 continues to perform work by automatic control.

On the other hand, if it is determined that the switching to the remote control of the work system of the master machine 100 has been completed (YES in STEP 202), the slave machine 200 performs work upon receipt of control by the remote control from the master machine 100 (STEP 203).

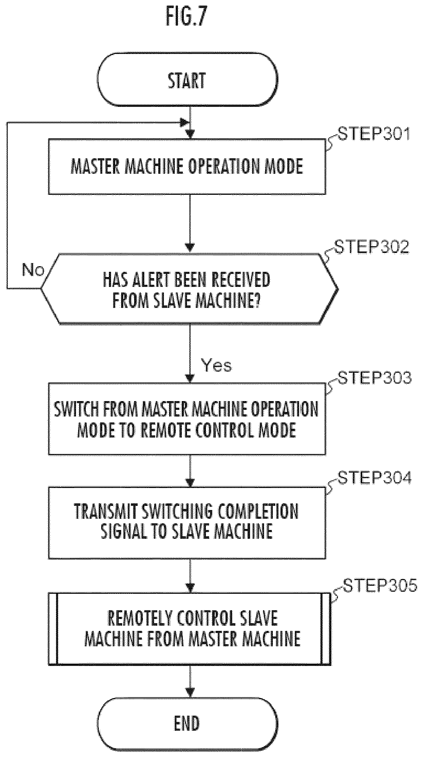

The foregoing is a rough operation of the master machine 100 and the slave machine 200. Then, a specific example of an operation for switching between work by automatic control and work by remote control will be described with reference to FIG. 7 to FIG. 9.

FIG. 7 is a flowchart illustrating a routine of mode switching processing in the master machine 100.

The master machine 100 is set to a master machine operation mode in a normal working state, and performs work using the master machine 100 as an actual machine (STEP 301).

If the control device 61 in the master machine 100 determines whether or not an alert has been received from any one of the plurality of slave machines 200 (STEP 302). If an abnormality has occurred in work in any one of the plurality of slave machines 200, the alert is transmitted from the slave machine 200.

If it is determined that the alert has not been received (NO in STEP 302), the processing returns to STEP 301, and the master machine 100 continues to perform an operation in the master machine operation mode.

On the other hand, if it is determined that the alert has been received (YES in STEP 302), the control device 61 in the master machine 100 switches an operation mode from the master machine operation mode to a remote control mode (STEP 303). When the switching has been completed, the master machine 100 transmits a switching completion signal to the slave machine 200 as a remote control target (i.e., the slave machine 200 as an alert transmission source among the plurality of slave machines 200) (STEP 304).

The master machine 100 remotely controls the slave machine 200, and causes the slave machine 200 to perform work (STEP 305).

The master machine 100 performs mode switching processing according to the above-described processing routine.

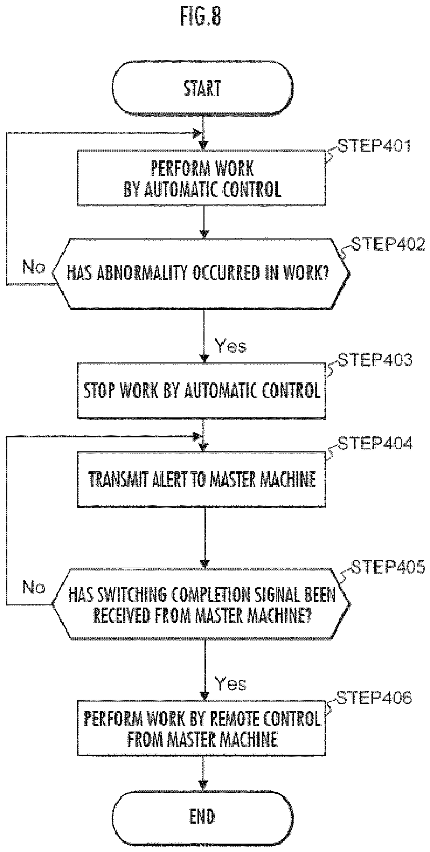

Then, mode switching processing to be performed by the slave machine 200 will be described. FIG. 8 is a flowchart illustrating a routine of the mode switching processing in the slave machine 200.

The control device 71 in the slave machine 200 reads out an existing automatic control program in response to turn-on of power, and causes the slave machine 200 to perform work according to automatic control (STEP 401).

The control device 71 in the slave machine 200 determines whether or not a delay of a work time period exceeds a predetermined value and an angle of a machine body exceeds a predetermined threshold value, to determine whether or not an abnormality has occurred in work of the slave machine 200 (STEP 402).

If it is determined that an abnormality has not occurred (NO in STEP 402), the processing returns to STEP 401, and the slave machine 200 continues to perform the work by the automatic control.

On the other hand, if it is determined that the abnormality has occurred in the work (YES in STEP 402), the slave machine 200 stops the work by the automatic control (STEP 403). In the slave machine 200, the alert message generation unit 75 generates an alert, and the alert communication equipment 76 transmits the alert to the master machine 100 (STEP 404).

The control device 71 in the slave machine 200 transmits the alert, and then waits until a switching completion signal is transmitted from the master machine 100. That is, the control device 71 in the slave machine 200 determines whether or not the switching completion signal has been received from the master machine 100 (STEP 405). If it is determined that the switching completion signal has not been received (NO in STEP 405), the processing returns to STEP 404, and the alert communication equipment 76 in the slave machine 200 transmits the alert again toward the master machine 100.

On the other hand, if it is determined that the switching completion signal has been received (YES in STEP 405), the slave machine 200 performs work upon receipt of remote control by the master machine 100 (STEP 406).

The slave machine 200 performs mode switching processing according to the above-described processing routine.

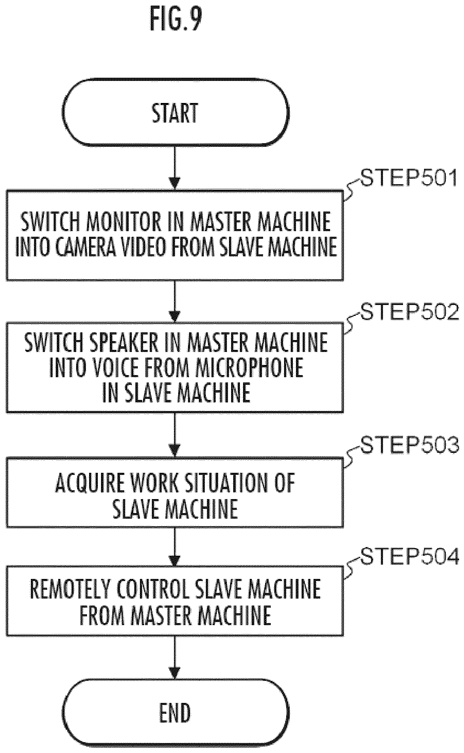

Then, an operation of the master machine 100 in a remote control mode will be described. Fig. 9 is a flowchart illustrating a processing routine corresponding to STEP 305 illustrated in Fig. 7.

The control device 61 in the master machine 100 switches a video to be displayed on the monitor 54 into a camera video from the slave machine 200 (STEP 501).

The control device 61 in the master machine 100 switches a voice to be outputted from the speaker 55 into a voice collected by the sound collection unit 74 in the slave machine 200 (STEP 502).

The communication equipment 53 in the master machine 100 receives work information from the slave machine 200, and acquires information about a work situation of the slave machine 200 (STEP 503).

The operator who is riding in the master machine 100 operates a lever or the like of the operation mechanism 52 based on information about a camera video from the slave machine 200 displayed on the monitor 54, a voice around the slave machine 200 to be outputted from the speaker 55, and the work situation of the slave machine 200, and causes the slave machine 200 to perform work by remote control (STEP 504).

In the work system according to the present embodiment, as described above, in a normal working state, the operator who rides in the master machine 100 operates the master machine 100 as a machine that actually performs work, and causes the master machine 100 to perform work such as excavation work around the master machine 100. The slave machine 200 performs work according to an automatic control program.

The slave machine 200 stops, when detecting that an abnormality has occurred in its own work, work by automatic control, generates an alert, and transmits the alert to the master machine 100. The master machine 100 switches an operation mode from a master machine operation mode to a remote control mode in response to receiving of a warning, and transmits a switching completion signal to the slave machine 200 as a transmission source of the alert. The slave machine 200 receives the switching completion signal, and performs work based on the remote control by the master machine 100.

The work system according to the present embodiment makes it possible to remotely control, while performing work using the master machine 100 (an own machine), the slave machine 200 (another machine), as needed. Driving of the work machine 100 is performed depending on an operation mode of the operation mechanism 52 by the operator. Driving of the master machine 100 may be controlled using an electric signal and/or a pilot pressure (hydraulic pressure) corresponding to the operation mode of the operation mechanism 52. If the slave machine 200 is remotely controlled, an operation command signal corresponding to the operation mode of the operation mechanism 52 by the operator is generated, and is transmitted to the slave machine 200. Thus, the master machine 100 enables both driving of the master machine 100 (the own machine) and remote control of the slave machine 200 (the other machine) through an operation of the operation mechanism 52. Therefore, the operator can perform an operation of a plurality of work machines using a common interface.

The slave machine 200 performs work by automatic control in a normal working state, and performs work upon receipt of remote control from the master machine 100 when there occurs a complicated work situation (i.e., work) where the work by the automatic control is difficult. Such a configuration makes it possible to cause the slave machine 200 to perform not only simple work but also complicated work while reducing a burden on the operator.

In the work system according to the present embodiment, the operator of the master machine 100 operates the master machine 100 as a normal work machine at a normal time, and operates the slave machine 200 by remote control and causes the slave machine 200 to perform work when a situation where complicated work is required has occurred in the slave machine 200. In the case, the operator who is riding in the master machine 100 remotely controls the slave machine 200 while receiving an event occurring around the slave machine 200 as visual information and/or auditory information. Such a configuration makes it possible for the operator to perform the work by the remote control with the same feeling as that when a similar situation has occurred in the master machine 100 in which the operator himself/herself is riding. Therefore, the work system according to the present embodiment makes it possible to perform remote control with a realistic sensation.

### (Other Embodiments of Present Invention)

An embodiment of the present invention is not limited to that described in the above-described embodiment. For example, in the above-described embodiment, an example has been described where the operator who is riding in the master machine 100 is made to perceive a situation around the slave machine 200 by displaying an image and a video acquired by the image pickup unit 73 in the slave machine 200 on the monitor 54 in the master machine 100 and outputting a voice collected by the sound collection unit 74 in the slave machine 200 from the speaker 55 in the master machine 100. However, a method of transmitting a work situation of the slave machine 200 to the operator who is riding in the master machine 100 is not limited to this. For example, a slave machine 200 may be provided with a sensor that senses a vibration, to transmit information about the sensed vibration to the master machine 100. When a seat 51 in the master machine 100 is vibrated based on the information about the vibration, an operator can perform an operation while falsely sensing a vibration occurring in the slave machine 200.

An operation mechanism 52 may receive from the operator a first specifying operation for specifying whether or not an operation command signal can be transmitted, and a control device 61 (a master control device) may determine whether or not communication equipment 53 is caused to transmit the operation command signal to the slave machine 200 in response to the first specifying operation received by the operation mechanism 52. Such a configuration makes it possible for the operator to appropriately switch an operation of the master machine 100 (an own machine) in which the operator himself/herself is riding and remote control of the slave machine 200 (another machine) to perform an operation.

The operation mechanism 52 may receive from the operator a second specifying operation for specifying one of a plurality of slave machines 200 as a specified work machine, and the control device 61 (the master control device) may cause the communication equipment 53 to transmit the operation command signal to the specified work machine corresponding to the second specifying operation received by the operation mechanism 52. Such a configuration makes it possible to selectively remotely control one of the plurality of slave machines 200 (other machines).

The communication equipment 53 may receive working state information relating to a working state of the specified work machine from the specified work machine and the master machine 100 may further include a notification section that outputs the working state information received by the communication equipment 53. Such a configuration makes it possible for the operator to perform an operation with a realistic sensation when remotely controlling the other machine.

### Reference Signs List

100..Master work machine,
200.. Slave work machine,
10..Construction machine (work machine),
11..Lower traveling body,
14..Upper turning body,
15..Work device,
16..Cab,
21..Boom,
23..Arm,
25..Bucket,
28..First camera,
29..Second camera,
30..Sensor section,
31..Microphone for engine sounds,
32..Microphone for work section peripheral sounds,
33..Microphone for distal end attachment peripheral sounds,
34..Vibration sensor,
35..Inclination sensor,
50..Operation chamber (ride section),
51..Seat,
52..Operation mechanism,
53..Communication equipment,
54..Monitor,
55..Speaker,
56..Operation switching section,
61..Control device (master control device),
62..Antenna,
63..Actuator (master driving mechanism),
64..Light,
65..Remote control target switching device,
71..Control device (slave control device),
72..Antenna,
73..Image pickup unit,
74.. Sound collection unit,
75..Warning message generation unit,
76..Alert communication equipment,
77..Automatic control/remote control switching device,
78..Actuator (slave driving mechanism).

## Claims

1. A work machine comprising a ride section in which an operator can ride, the work machine comprising:
an operation mechanism provided in the ride section and to be operated by the operator,
a driving mechanism configured to drive the work machine;
communication equipment; and
a master control device that controls an operation of the driving mechanism depending on an operation mode of the operation mechanism by the operator and causes the communication equipment to transmit an operation command signal to at least one other work machine other than the work machine after generating the operation command signal.

2. The work machine according to claim 1, wherein
the operation mechanism receives from the operator a first specifying operation for specifying whether or not the operation command signal can be transmitted, and
the master control device determines whether or not the communication equipment is caused to transmit the operation command signal in response to the first specifying operation received by the operation mechanism.

3. The work machine according to claim 2, wherein
the operation mechanism receives from the operator a second specifying operation for specifying one of the plurality of other work machines as a specified work machine, and
the master control device causes the communication equipment to transmit the operation command signal to the specified work machine corresponding to the second specifying operation received by the operation mechanism.

4. The work machine according to claim 3, wherein
the communication equipment receives working state information relating to a working state of the specified work machine from the specified work machine, and
the work machine further comprises a notification section that outputs the working state information received by the communication equipment.

5. The work machine according to claim 4, wherein
the communication equipment receives from the specified work machine a warning indicating that a state where work is difficult has occurred in the specified work machine, and
the notification section outputs the warning.

6. The work machine according to claim 4, wherein the master control device causes the communication equipment to transmit the operation command signal to the specified work machine in response to the communication equipment receiving from the specified work machine a warning indicating that a state where work is difficult has occurred in the specified work machine.

7. A work machine that is communicatively connected with another work machine and performs work according to a control program based on a work plan, the work machine comprising:
a driving mechanism configured to drive the work machine;
communication equipment; and
a slave control device that controls an operation of the driving mechanism to cause the work machine to perform work based on the predetermined work plan according to the control program,
wherein the slave control device compares progress of work by the work machine with the predetermined work plan, causes the communication equipment to transmit a warning to the other work machine in a case where a result of the comparison indicates that the progress of the work by the work machine deviates from the predetermined work plan, and controls the operation of the driving mechanism based on an operation command signal from the other work machine received from the other work machine by the communication equipment after transmitting the warning.

8. A work system comprising a master machine and a slave machine, wherein
the master machine comprises
a ride section in which an operator can ride,
an operation mechanism provided in the ride section and to be operated by the operator,
a master driving mechanism configured to drive the master machine,
master communication equipment, and
a master control device that controls an operation of the master driving mechanism depending on an operation mode of the operation mechanism by the operator and causes the master communication equipment to transmit an operation command signal to the slave machine after generating the operation command signal.
